# EUROPÄISCHE PATENTSCHRIFT

(11) **EP 1 662 913 B1**
(45) Veröffentlichungstag und Bekanntmachung des Hinweises auf die Patenterteilung: **26.08.2009**
(21) Anmeldenummer: 04765306.8
(22) Anmeldetag: 16.09.2004
(51) Int. Cl.: A23L 2/54, B67C 3/06, B01F 3/04

(54) **VERFAHREN UND VORRICHTUNG ZUR HERSTELLUNG UND ABFUELLUNG VON MIT SAUERSTOFF ANGEREICHERTEN FLUESSIGKEITEN**
METHOD AND DEVICE FOR THE PRODUCTION AND BOTTLING OF LIQUIDS ENRICHED WITH OXYGEN
PROCEDE ET DISPOSITIF POUR PRODUIRE ET EMBOUTEILLER DES LIQUIDES ENRICHIS EN OXYGENE

(30) Priorität: 18.09.2003 DE 10343281
(43) Veröffentlichungstag der Anmeldung: 07.06.2006
(73) Patentinhaber: Krones Aktiengesellschaft, 93073 Neutraubling (DE)
(72) Erfinder: STADLMAYR, Thomas, 83278 Traunstein (DE); ZIEGLER, Manfred, 94161 Ruderting (DE)
(74) Vertreter: Herzog, Markus
(86) Internationale Anmeldenummer: PCT/EP2004/010407
(87) Internationale Veröffentlichungsnummer: WO 2005/029982

(56) Entgegenhaltungen:
- EP-A1- 0 847 959
- EP-A1- 0 900 761
- WO-A1-02/089611
- US-A1- 2002 139 434

## Beschreibung

Die Erfindung betrifft ein Verfahren und eine vorrichtung zur Herstellung und Abfüllung von mit Sauerstoff oder mit einem Sauerstoff-Gasgemisch angereicherten Flüssigkeiten gemäß dem Oberbegriff des Anspruchs 1 bzw. 10.

Verfahren und Vorrichtungen zur Herstellung von mit Sauerstoff stark angereicherten Flüssigkeiten, insbesondere Getränken sind aus dem europäischen Patent EP 0 847 959 B1 sowie der deutschen Offenlegungsschrift DE 101 04 207 A1 bekannt.

Bei diesen Verfahren wird die mit Sauerstoff angereicherte Flüssigkeit von der Imprägnierung bis zur Abfüllung in Behälter unter einer reinen Sauerstoffatmosphäre oder einem Sauerstoff-Gasgemisch gehalten. Vor dem Einleiten der Flüssigkeit in einen Behälter wird dieser in einer Füllmaschine ebenfalls mit Sauerstoff oder einem Sauerstoff-Gasgemisch vorgespannt. Bei dem gesamten Verfahren muss ein nicht unerheblicher Sauerstoffverlust in Kauf genommen werden. Reiner Sauerstoff ist nicht nur teuer sondern auf Grund seiner Reaktionsfreudigkeit in der Handhabung auch nicht unkritisch.

Demgegenüber liegt der Erfindung die Aufgabe zu Grunde, ein verbessertes Verfahren und eine Vorrichtung zur Herstellung und Abfüllung von mit Sauerstoff angereicherten Flüssigkeiten sowie einen damit erhältlichen Getränkebehälter anzugeben.

Diese Aufgabe wird das Verfahren betreffend durch die kennzeichnenden Merkmale des Anspruchs 1 und die Vorrichtung betreffend durch die kennzeichnenden Merkmale des Anspruchs 10 gelöst.

Während es bislang notwendig erschien, mit einem sehr hohen O₂-Gehalt (75 mg/l bis 330 mg/l) angereicherte Flüssigkeiten, insbesondere Getränke wie Mineralwässer, Limonaden, Fruchtsäfte oder dgl. vom Zeitpunkt der O₂-Anreicherung bis zur Abfüllung in Behälter, wie Flaschen, Dosen oder andere geeignete Gefäße unter einer Sauerstoffatmosphäre oder einem Sauerstoff-Gasgemisch zu halten, um eine O₂-Entbindung zu vermeiden, verlässt die Erfindung diesen weg und nutzt die überraschende Erkenntnis, dass auf Grund der im laufenden Herstell- und Abfüllprozess nur kurzen verweilzeit der Flüssigkeit im System auch nur eine kurze Kontaktzeit zwischen der angereicherten Flüssigkeit und dem erfindungsgemäß verwendeten Stickstoff besteht. Es hat sich überraschenderweise gezeigt, dass bei einer Vorspannung der zu befüllenden Behälter mit Stickstoff keine negative Rückwirkung auf die O₂-angereicherte Flüssigkeit auftritt, d.h. der gelöste O₂-Gehalt wird nicht nennenswert beeinflusst und es findet praktisch keine Stickstoffaufnahme in die Flüssigkeit statt. Diese Effekte dürften auf das nur träge Lösungsverhalten von Stickstoff zurückzuführen sein.

Gemäß einer vorteilhaften Weiterbildung kann dem Vorspannen der Behälter mit Stickstoff auch eine Spülbehandlung, ebenfalls mit Stickstoff, vorausgehen.

Bei formstabilen Behältnissen, z.B. Glasflaschen, ist vor dem Einleiten der O₂-angereicherten Flüssigkeit alternativ oder zusätzlich wenigstens ein Evakuierungsschritt denkbar, bevor das Vorspannen auf einen über dem Atmosphärendruck, insbesondere Sättigungsdruck der Flüssigkeit liegenden Fülldruck erfolgt. Ferner ist eine mehrfach kombinierte Spül- /vorevakuierungsbehandlung eines Behälters vor dem Vorspannen denkbar.

Eine weitere Ausgestaltung der Erfindung sieht vor dem Einleiten der Flüssigkeit ein Einbringen einer geringen Menge eines flüssigen Gases in die Behältnisse vor, z.B. flüssigen Stickstoff und/oder Sauerstoff. Mit einer darauffolgenden kurzzeitigen Evakuierung kann das Flüssiggas durch eine verhältnismäßig schnelle Druckabsenkung zügig verdampft werden, wodurch ebenfalls eine Gasatmosphäre, insbesondere aus Stickstoff herbeiführbar ist. Flüssiger Sauerstoff ist in der Handhabung unkritischer als reiner Sauerstoff in gasförmiger Phase. Natürlich kann dem Einleiten der abzufüllenden Flüssigkeit in die Behältnisse wiederum eine vorspannphase vorausgehen.

Die Verwendung von Stickstoff muss nicht allein auf die zu befüllenden Behältnisse beschränkt sein, sondern kann sich auch auf die Speicherbehälter in der Füllmaschine sowie in der Flüssigkeitsimprägnieranlage (Imprägniertank, Speichertanks etc.) erstrecken, d.h. der gesamte Herstellprozess beginnend von der Imprägnierung einer Flüssigkeit mit Sauerstoff bis zur Abfüllung in Behältnisse kann durchgehend unter einer Stickstoffatmosphäre stattfinden.

Vorteilhafter Weise ist Stickstoff in seiner Handhabung nicht nur unkritischer, sondern auch deutlich kostengünstiger als Sauerstoff.

weitere vorteilhafte Ausgestaltungen sind Gegenstand der verbleibenden Unteransprüche.

Nachfolgend wird ein bevorzugtes Ausführungsbeispiel anhand der Figuren erläutert. Es zeigt:
- Fig. 1: eine Draufsicht einer Vorrichtung zum Herstellen und Abfüllen von Getränken in Flaschen in einer schematischen Darstellung und
- Fig. 2a bis 2g: jeweils einen vertikalen Teilschnitt durch die äußere Peripherie einer Füllmaschine nach Fig. 1 in mehreren zeitlich aufeinanderfolgenden Betriebszuständen.

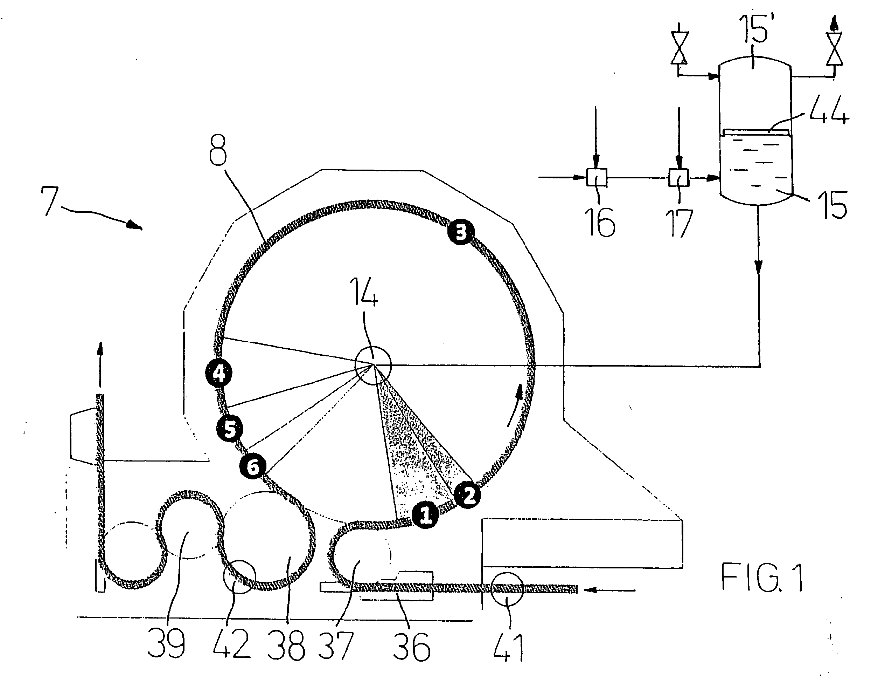

Eine Anlage zum Herstellen und Abfüllen von mit Sauerstoff angereicherten Flüssigkeiten, insbesondere Getränken, verfügt gemäß Fig. 1 über eine kontinuierlich rotierend antreibbare Füllmaschine 7, die beispielsweise einen mit dem abzufüllenden Getränk teilgefüllten Ringkessel 8 und einen über dem Getränkespiegel 9 mit einem Druckgaspolster gefüllten Gasraum 10 aufweist, wobei der Druck wenigstens dem Sättigungsdruck des jeweiligen Getränks entspricht, vorzugsweise im Bereich von 1 bis 10 bar. Im vorliegenden Fall ist der Gasraum mit Stickstoff gefüllt.

Entlang der Peripherie des Ringkessels befinden sich in gleichmäßigen Teilungsabständen über den gesamten Umfang verteilt angeordnete Füllorgane 11, die jeweils mit einer Flüssigkeitszuleitung 12 - einen induktiven Durchflussmesssensor 13 passierend - an der Kesselunterseite angeschlossen sind. Die Versorgung des kontinuierlich umlaufend antreibbaren Ringkessels der Füllmaschine mit dem abzufüllenden Getränk und dem genannten Druckgas (reiner Stickstoff) erfolgt in an sich bekannter Weise über im Zentrum der Füllmaschine angeordnete Drehverteiler 14, die zum einen mit einer Gaszuführungsleitung und zum anderen mit einem Puffertank 15 einer Imprägnieranlage zur Flüssigkeitszuführung leitend in Verbindung stehen.

Die Imprägnieranlage verfügt in an sich bekannter Weise zur Anreicherung einer Flüssigkeit, z.B. Wasser, Limonade, Tee oder dgl. mit Sauerstoff über wenigstens einen Injektor 16, der einen Anschluss für die Zuführung der Flüssigkeit und wenigstens einen weiteren Anschluss zur Einspeisung von Sauerstoff besitzt. Bedarfsweise können noch weitere Injektoren 17, z.B. zum Lösen von CO₂ vorhanden sein. Gebenenfalls können mehrere parallel geschaltete Injektoren mit unterschiedlichen Durchflussquerschnitten vorgesehen werden, um bei unterschiedlichen Durchsatzmengen durch Auswahl des/der passenden Injektors(-en) optimale Mischverhältnisse zu erzielen.

Die aus dem verwendeten Injektor 16, 17 auslaufseitig gelieferte, einen hohen Anteil gelösten Sauerstoff aufweisende Flüssigkeit wird in einen Imprägnier- bzw. Puffertank 15 geleitet, der nur teilweise flüssigkeitsgefüllt ist und ein auf den Flüssigkeitsspiegel wirkendes, im Behälter eingeschlossenes Gaspolster 15' aufweist, das durch eine Gaszuleitung und eine Gasableitung bei Füllspiegelschwankungen gesteuert druckregulierbar ist. Auch dieses Druckgas (Stickstoff) weist einen wenigstens über dem Sättigungsdruck der Flüssigkeit liegenden Überdruck auf.

Zur Speisung der Injektoren sowie Überführung des fertig gemischten Getränks in die Füllmaschine sind nicht dargestellte regelbare Pumpen vorgesehen.

Jedes der Füllorgane 11 verfügt über ein elektropneumatisch gesteuert betätigbares Flüssigkeitsventil 18, das konzentrisch von einem Gaskanal 19 durchgriffen wird. Dieser in ein nach unten vorstehendes Gasröhrchen 20 übergehende Gaskanal steht über eine Anschlussleitung 21 mit einem Auslass einer dem Füllorgan 11 zugeordneten Ventilinsel 22, die im vorliegenden Fall pro Füllorgan fünf einzelne elektropneumatisch gesteuert betätigbare Gasventile 23 bis 27 zum verlaufsabhängigen Zu- und Abführen der einzelnen Prozessgase in Abhängigkeit des Füllprozesses aufweist, in Verbindung. Eines der genannten Ventile 27 mündet allerdings über eine Verbindungsleitung in einen unterhalb des Flüssigkeitsventils 18 liegenden Gasanschnitt ein.

Alle Ventilinseln 22 sind gemeinsam mit den Flüssigkeitsventilen 18 an einem ringförmigen Träger 28 befestigt, der im vorliegenden Fall drei vollumfänglich horizontal verlaufende, zur Umgebungsatmosphäre geschlossene Ringkanäle 29, 30, 31 aufweist, die ebenfalls mit zugeordneten Drehverteilern im Zentrum der Füllmaschine zur Gaszu- oder -abfuhr verbunden sind. Dies können im Einzelnen ein Reingaskanal 29, ein Spülgaskanal 30 und ein Entlastungs- bzw. Vakuumkanal 31 sein.

Im Bereich unterhalb der Füllorgane 11 befinden sich über eine verdrehfeste Hubkurve 34 in Verbindung mit Kurvenrollen 33 gesteuert heb- und senkbare pneumatische Hubzylinder 32, die jeweils einen unterhalb am Halskragen von Kunststoffflaschen 40 angreifendes Greif- oder Halteorgan 35 besitzen. Ein im Hubzylinder eingeschlossenes Gaspolster übt während eines gesamten Umlaufs permanent eine in Richtung nach oben zum Füllorgan 11 gerichtete Anpresskraft aus.

Nachfolgend wird ein vollständiger Abfüllzyklus einer Flasche anhand der die einzelnen Füllphasen darstellende Figurenfolge 2a bis 2g erläutert:

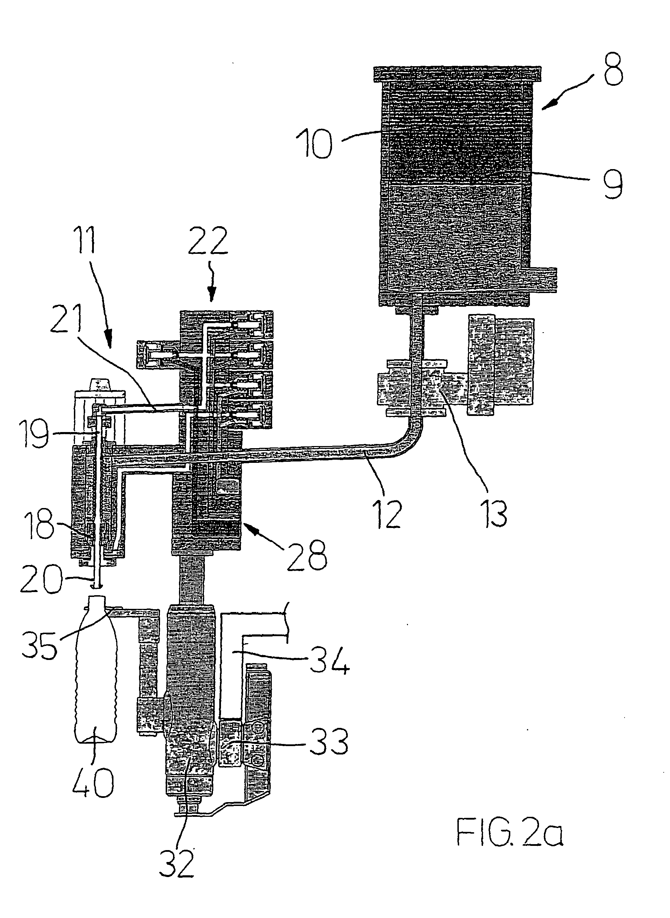

Eine kontinuierlich einspurig beispielsweise von einer Kunststoffflaschen 40 herstellenden Streckblasmaschine (nicht dargestellt) zulaufende Flaschenreihe wird von einer im Einlaufbereich der Füllmaschine 7 angeordneten Einteilschnecke 36 auf das Teilungsmaß der Füllorgane am Umfang der Füllmaschine auseinandergezogen und von einem nachfolgenden Einlaufstern 37 in die Hubzylinder 32 übergeben. Dabei wird jeweils eine Flasche 40 unterhalb ihres Halskragens erfasst, derart, dass ihre offene Mündung konzentrisch zum Flüssigkeitsauslauf des darüber liegend positionierten Füllorgane 11 ausgerichtet gehalten wird (Fig. 2a) .

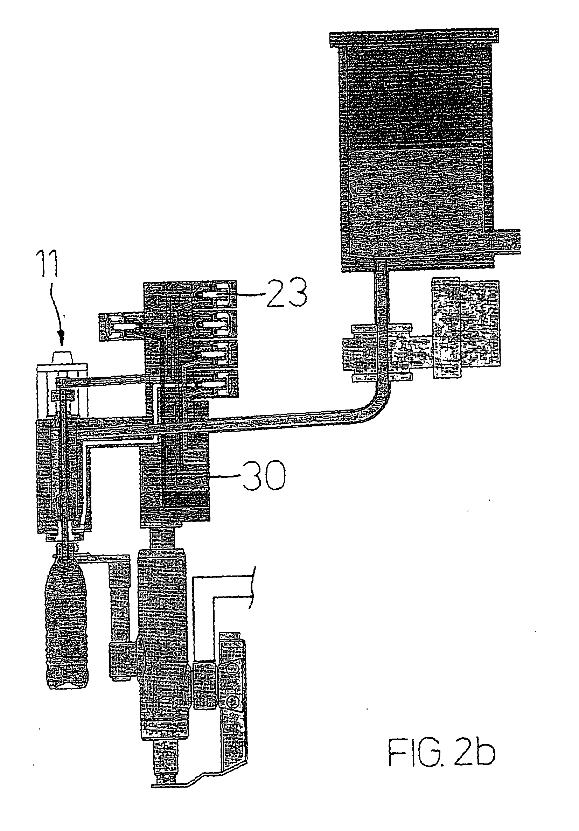

Die mit der Kurvenrolle 32 des Hubzylinders 32 zusammenwirkende stationäre Hubkurve 34 ist in Umlaufrichtung so gestaltet, dass die Flasche 40 mit ihrer Mündung zunächst in Richtung zum Flüssigkeitsauslauf angehoben aber noch nicht in einen gasdichten Anpresssitz mit dem Füllorgane 11 gelangt. Während dieses Vorgangs taucht das den Flüssigkeitsauslass nach unten überragende Gasröhrchen 20 in den Halsraum der zu befüllenden Flasche 40 ein (Fig. 2b). Durch Öffnen eines Spülventils 23 wird eine Gasverbindung vom Spülgaskanal 30 über die Anschlussleitung 21 und das in die Flasche eintauchende Gasröhrchen 20 eröffnet, so dass im vorliegenden Fall ein im wesentlichen aus Stickstoff bestehendes Spülgas mit hoher Geschwindigkeit in die noch nicht abgedichtete Flasche einströmt und die ursprünglich enthaltene Luft durch die offene Flaschenmündung austreibt. Dies geschieht während dem in Fig. 1 mit Pos. 1 gekennzeichneten Umlaufbereich der Füllmaschine.

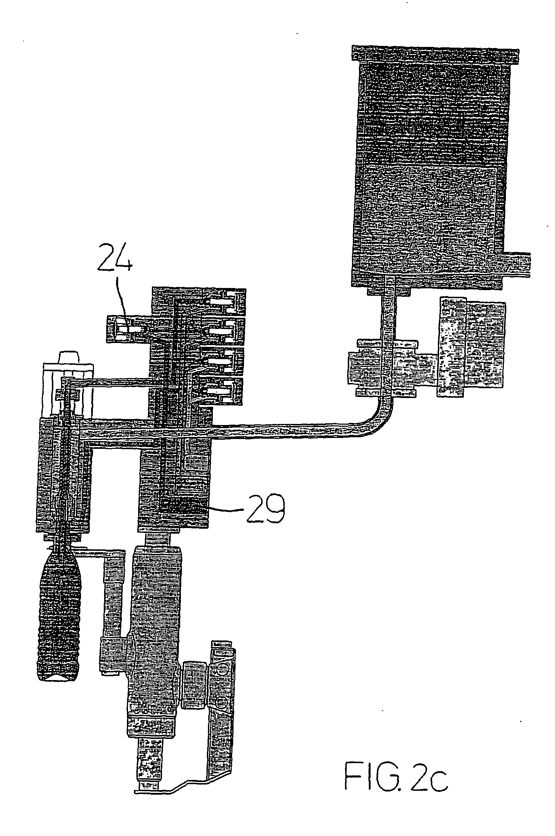

Durch nachfolgendes Anheben der Flasche 40 mittels des Hubzylinders 32 wird deren Mündung gasdicht gegen den Füllauslauf des Füllorgans 11 unterhalb des Flüssigkeitsventils 18 angepresst, woraufhin nach dem Schließen des Spülventils 23 ein Vorspannventil 24 geöffnet wird, um zwischen dem Gasröhrchen 20 und dem Reingaskanal 29 eine leitende Verbindung zu eröffnen (Fig. 2c). Nun kann reiner Stickstoff aus dem Reingaskanal 29 in die zur Atmosphäre abgedichtet gehaltene Flasche bis.zum Erreichen eines vorgebbaren Vorspanndrucks, vorzugsweise 1 bis 10 bar, eingeleitet werden, der im wesentlichen dem im Ringkessel der Füllmaschine herrschenden Gasdruck entspricht (Umlaufbereich 2 in Fig. 1). Der zwischen den beiden genannten Räumen vorliegende Gleichdruck kann beispielsweise über eine nicht dargestellte Verbindungsleitung gewährleistet werden. Das innerhalb des Ringkessels 8 der Füllmaschine 7 vorhandene Gaspolster 10 kann ebenfalls aus reinem Stickstoff bestehen. Der über dem Sättigungsdruck eines mit O₂-angereicherten Getränks liegende Kesselinnendruck hängt im Einzelfall vom Anreicherungsgrad des zu verarbeitenden Getränks und dessen Temperatur ab und ist dementsprechend einstellbar.

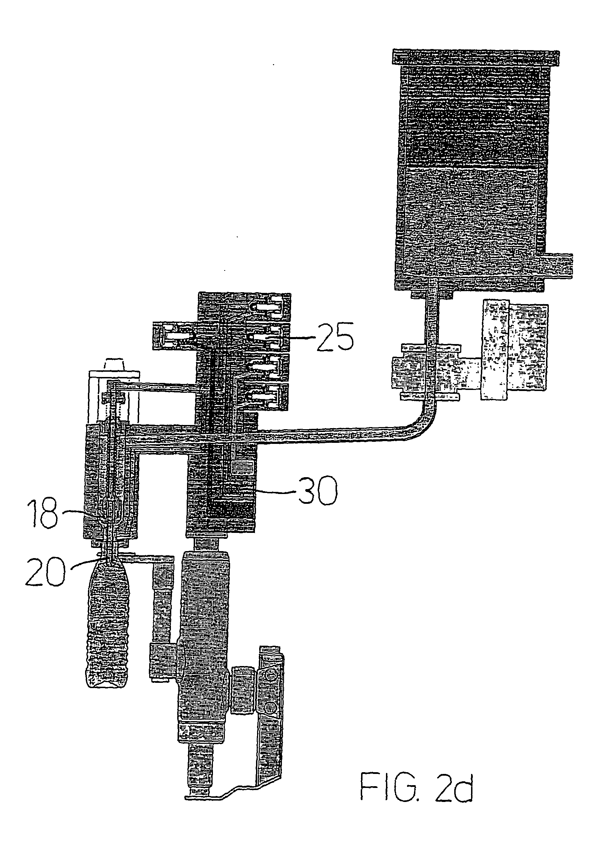

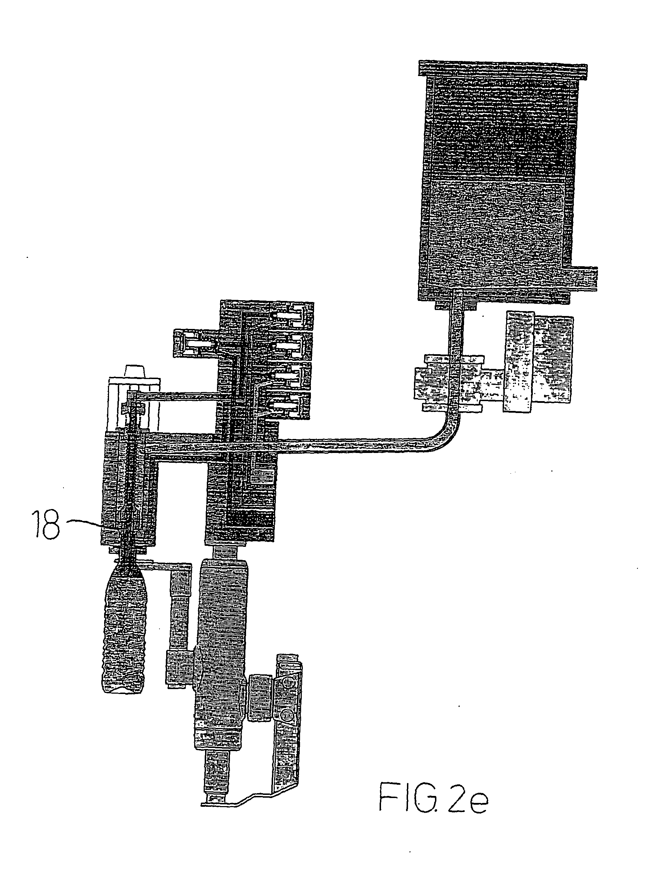

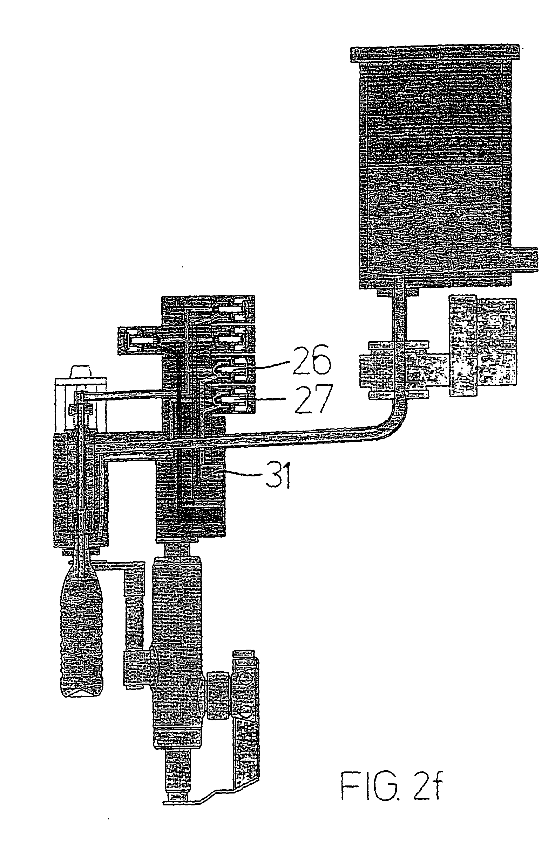

Bei Erreichen des gewünschten Vorspanndrucks in der Flasche wird nun das Flüssigkeitsventil 18 durch Anheben seines beweglichen Ventilkörpers vom zugeordneten Ventilsitz geöffnet, das vorspannventil 24 geschlossen und ein Rückgasventil 25 betätigt. Im weiteren Verlauf strömt nun das Getränk durch die Flaschenmündung in den Flascheninnenraum und wird durch ein im Bereich der sich erweiternden Flaschenschulter am Gasröhrchen 20 angebrachtes Abweisschirmchen an die Flaschenwandung geleitet, um von dort als Flüssigkeitsfilm an der Flaschenwandung entlang in Richtung zum Flaschenboden einzulaufen (Fig. 2d). Unterdessen wird die einströmende Getränkemenge durch den induktiven Durchflussmesssensor 13 fortlaufend erfasst. Dieser liefert bei Erreichen einer vorgebbaren Flüssigkeitsmenge ein Signal zum Schließen des Flüssigkeitsventils 18. Während dem Flüssigkeitseinlauf in die Flasche ist gleichzeitig das ursprünglich in der Flasche eingeschlossene Gasvolumen durch die einströmende Flüssigkeit über das Gasröhrchen 20 an dem in dieser Phase geöffneten Rückgasventil 25 vorbei in den Spülgaskanal zurückgeströmt (Umlaufbereich 3 in Fig. 1). Mit dem Schließen des Flüssigkeitsventils 18 wird annähernd zeitgleich auch dieses Rückgasventil 25 geschlossen (Fig. 2e). Nach einer vorgebbaren Beruhigungszeit (Umlaufbereich 4 in Fig. 1) wird durch Öffnen wenigstens eines Entlastungsventils 26 der noch unter Überdruck stehende Kopfraum der befüllten Flasche mit dem Entlastungskanal 31 gekoppelt, um eine Druckabsenkung, beispielsweise über eine zwischengeschaltete Drosseldüse, auf einen Zwischendruck oder gleich unmittelbar auf Atmosphärendruck herbeizuführen (Umlaufbereiche 5 und 6 in Fig. 1). Durch ein zweites Entlastungsventil 27 kann zeitgleich das Gasröhrchen 20 entlastet werden (siehe Fig. 2f). Es ist aber alternativ denkbar, im Entlastungskanal einen Unterdruck einzustellen, wenn eine entsprechend enger bemessene Drosseldüse zwischengeschaltet ist.

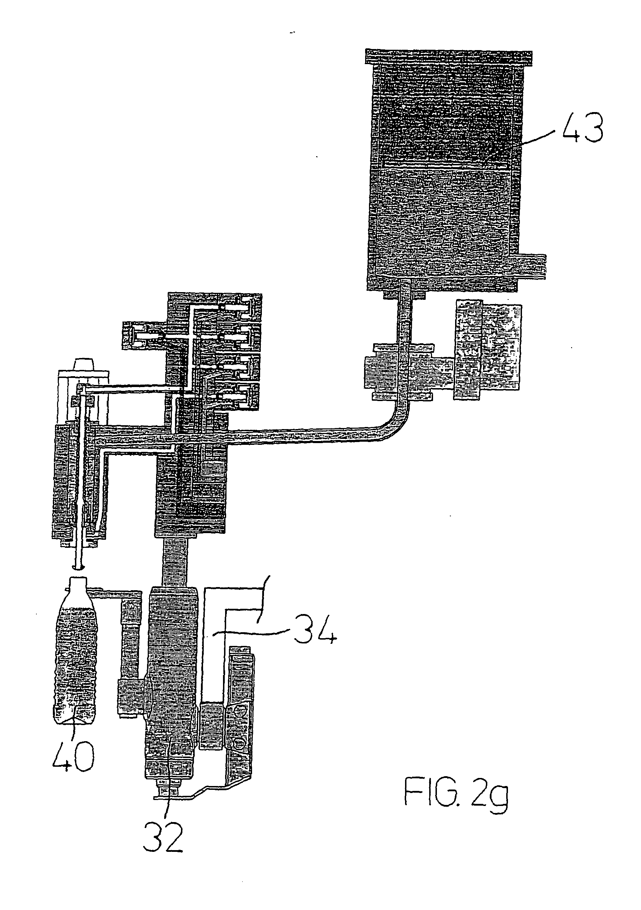

Nach dem Entlasten wird die Flasche 40 über die entsprechend gestaltete stationäre Hubkurve 34 entgegen der vom Hubzylinder 32 aufgebrachten, nach oben wirkenden Presskraft abgesenkt (Fig. 2g) und nachfolgend in den Auslaufstern 38 der Füllmaschine 7 übergeben, wobei gleichzeitig die die Flasche haltenden Greiforgane 35 des Hubzylinders 32 geöffnet werden. Nun kann die befüllte aber noch offene Flasche einem Verschließer 39 zugeführt werden, der beispielsweise einen Schraubverschuss gasdicht aufbringt.

Es ist denkbar, auf dem Weg vom Füller 7 zur Verschließmaschine 39 durch eine in diesem Transportbereich angeordnete steuerbare Einspritzvorrichtung 42 flüssigen Stickstoff und/oder Sauerstoff in den offenen Kopfraum der Flaschen impulsartig gesteuert einzudüsen, bevor ein Verschluss aufgesetzt wird.

Ebenso ist eine Eindüsung von flüssige Stickstoff und/oder Sauerstoff durch eine Einspritzvorrichtung 41 im Bereich vor dem Einlauf der Füllmaschine 7 denkbar, vor allem, wenn vor dem Einleiten der abzufüllenden Flüssigkeit kurzzeitig ein Vakuum erzeugt wird, indem das im Entlastungskanal vorhandene Vakuum vorübergehend mit der Flasche in Wirkverbindung gebracht wird. Es versteht sich, dass in diesem Falle die Flaschen in Abhängigkeit des gewünschten Unterdrucks eine ausreichende Formstabilität besitzen müssen, wie dies beispielsweise bei Glasflaschen ohne weiteres der Fall ist.

Um im Ringkessel 8 der Füllmaschine 7 oder auch im Puffer- bzw. Sammeltank 15 der Getränkeimprägnierstation einen Gasaustausch zwischen der Stickstoffatmosphäre und dem darunter liegenden Getränk zuverlässig zu vermeiden, kann im Ringkessel 8 zusätzlich ein ringscheibenförmiger Schwimmerkörper 43 verwendet werden, der das im Ringkessel vorhandene Getränkevolumen an seiner Oberfläche im Wesentlichen vollflächig abdeckt. Auch in den das sauerstoffhaltige Getränk aufnehmenden Tanks 15 der vor dem Füller liegenden Imprägnierstation können zum gleichen Zweck den Flüssigkeitsspiegel abdeckende Schwimmer 44 zum Einsatz kommen. Anstelle von Schwimmerkörpern sind auch elastische Membranen, Blasen oder Rollmembranen denkbar, wodurch sogar eine spaltfreie und damit vollständige Trennung von Druckgas und Getränk erreichbar wäre.

Alternativ zum vorgeschlagenen Stickstoff könnten ggf. Edelgase (Helium etc.) zum Einsatz kommen, die allerdings in der Beschaffung teurer sind.

## Patentansprüche

1. Verfahren zur Herstellung und Abfüllung von mit Sauerstoff oder einem Sauerstoff-Gasgemisch angereicherten Flüssigkeiten, insbesondere Getränken, in Behälter, insbesondere Flaschen oder Dosen, wobei die mit Sauerstoff und ggf. anderen Gasen, insbesondere in gelöster Form angereicherte Flüssigkeit in Behälter abgefüllt und diese dann druckdicht verschlossen werden, **dadurch gekennzeichnet, dass** die angereicherte Flüssigkeit während des Abfüllprozesses wenigstens zeitweise unter einer Stickstoffatmosphäre gehalten wird.

2. Verfahren nach dem Oberbegriff des Anspruchs 1, **dadurch gekennzeichnet, dass** die Flüssigkeit beginnend vom Zeitpunkt der Anreicherung mit Sauerstoff oder einem Sauerstoff-Gasgemisch wenigstens zeitweise unter einer Stickstoffatmosphäre gehalten wird.

3. Verfahren nach Anspruch 1 oder 2, **dadurch gekennzeichnet, dass** die Flüssigkeit beginnend vom Zeitpunkt der Anreicherung his zum Erreichen der gewünschten Füllhöhe im Behälter unter einer Stickstoffatmosphäre gehalten wird.

4. Verfahren nach wenigstens einem der vorhergehenden Ansprüche 1 bis 3, **dadurch gekennzeichnet, dass** die Stickstoffatmosphäre Überdruck aufweist, vorzugsweise im Bereich zwischen 1 bis 10 bar.

5. Verfahren nach wenigstens einem der vorhergehenden Ansprüche 1 bis 4, **dadurch gekennzeichnet, dass** ein Behälter vor dem Einleiten der angereicherten Flüssigkeit mit Stickstoff vorgespannt wird, insbesondere auf einen dem Fülldruck der Flüssigkeit entsprechenden Druck.

6. Verfahren nach wenigstens einem der vorhergehenden Ansprüche 1 bis 5, **dadurch gekennzeichnet, dass** der Behälter vor dem Einleiten der Flüssigkeit, insbesondere vor dem Vorspannen, wenigstens einmal gespült wird, vorzugsweise mit Stickstoff.

7. Verfahren nach wenigstens einem der vorhergehenden Ansprüche 1 bis 6, **dadurch gekennzeichnet, dass** der Behälter vor dem Einleiten der Flüssigkeit wenigstens einmal evakuiert wird, insbesondere vor einem Vorspannen mit Stickstoff, vorzugsweise vor und/oder nach einem Spülen des Behälters, vorzugsweise mit Stickstoff.

8. Verfahren nach Anspruch 6 oder 7, **dadurch gekennzeichnet, dass** beim Einleiten der Flüssigkeit in den Behälter aus diesem verdrängtes Rückgas gesammelt und für eine Spülbehandlung nachfolgender Behälter verwendet wird.

9. Verfahren nach wenigstens einem der vorhergehenden Ansprüche 1 bis 8, **dadurch gekennzeichnet, dass** in den Behälter vor dem Einleiten der Flüssigkeit, insbesondere vor einem Evakuierungsschritt, ein Gas in flüssiger Phase, vorzugsweise flüssiger Stickstoff und/oder Sauerstoff eingebracht wird.

10. Vorrichtung zum Herstellen und Abfüllen von mit Sauerstoff oder einem Sauerstoff-Gasgemisch angereicherten Flüssigkeiten (45), insbesondere Getränken, in Behälter (40), insbesondere Flaschen oder Dosen, wobei die mit Sauerstoff und ggf. anderen Gasen, insbesondere in gelöster Form angereicherte Flüssigkeit von der Vorrichtung in die Behälter abgefüllt und diese dann mit einem Verschluss druckdicht verschlossen werden, insbesondere zum Ausführen des Verfahrens nach wenigstens einem der Ansprüche 1 bis 9, **dadurch gekennzeichnet, dass** die Vorrichtung (7) wenigstens ein Füllorgan (11) mit einem Flüssigkeitsventil (18), wenigstens einem Gasventil (23, 34) und eine mit Stickstoff gefüllte Kammer (10, 29, 30) aufweist, wobei über das Gasventil (23, 24) zwischen einem an das Füllorgan (11) angesetzten Behälter (46) und der Kammer (10, 29, 30) eine leitende Verbindung zum Spülen und/oder Vorspannen des Behälters (40) mit Stickstoff herstellbar ist, und dass die Vorrichtung (7) einen mit Flüssigkeit (9) teilgefüllten Kessel (8) aufweist und die Flüssigkeit im Kessel mit Stickstoff druckbeaufschlagbar ist, vorzugsweise im Bereich von 1 bis 10 bar.

11. Vorrichtung nach Anspruch 10, **dadurch gekennzeichnet, dass** das Füllorgan (11) über ein Spülventil (23) mit einem Spülgaskanal (30) und/oder über ein Vorspannventil (24) mit einem Reingaskanal (29) verbindbar ist.

12. Vorrichtung nach Anspruch 10 oder 11, **dadurch gekennzeichnet, dass** das Füllorgan (11) über wenigstens ein Entlastungsventil (26, 27) mit einem Entlastungs- und/oder Vakuumkanal (30) verbindbar ist.

13. Vorrichtung nach dem Oberbegriff von Anspruch 10, **dadurch gekennzeichnet, dass** eine Flüssigkeit nach Anreicherung mit Sauerstoff in einen teilgefüllten Tank (15) geleitet und mit Stickstoff druckbeaufschlagbar ist.

14. Vorrichtung nach Anspruch 10 oder 13, **dadurch gekennzeichnet, dass** die Flüssigkeit im Kessel (8) und/oder Tank (15) wenigstens annähernd vollständig von den druckausübenden Gas trennbar ist, insbesondere durch bewegliche Schwimmerkörper (43, 44) oder elastische Membranen.

15. Vorrichtung nach dem Oberbegriff von Anspruch 10, **dadurch gekennzeichnet, dass** der Vorrichtung (7) zum Befüllen von Behältern (40) eine Einrichtung (41) zum Einbringen von flüssigem Gas, insbesondere Stickstoff oder Sauerstoff, in die offenen Behälter vorgeordnet ist.

## Claims

1. A method for the preparation and bottling of liquids, in particular beverages, enriched with oxygen or with an oxygen/gas mixture, in containers, in particular bottles or cans, wherein the liquid enriched with oxygen and, optionally, other gases, in particular in dissolved form, is filled into containers which are then sealed in a pressure-tight manner, **characterised in that** the enriched liquid is kept under a nitrogen atmosphere at least temporarily during the bottling process.

2. A method according to the preamble of Claim 1, **characterised in that** the liquid is kept under a nitrogen atmosphere at least temporarily starting from the time of enrichment with oxygen or an oxygen/gas mixture.

3. A method according to Claim 1 or 2, **characterised in that** the liquid is kept under a nitrogen atmosphere starting from the time of enrichment until the desired filling level in the container is reached.

4. A method according to at least one of the preceding Claims 1 to 3, **characterised in that** the nitrogen atmosphere is at overpressure, preferably in the range between 1 and 10 bar.

5. A method according to at least one of the preceding Claims 1 to 4, **characterised in that**, prior to the introduction of the enriched liquid, a container is pre-pressurised with nitrogen, in particular to a pressure corresponding to the filling pressure of the liquid.

6. A method according to at least one of the preceding Claims 1 to 5, **characterised in that**, prior to the introduction of the liquid, in particular prior to the pre-pressurisation, the container is flushed at least once, preferably with nitrogen.

7. A method according to at least one of the preceding Claims 1 to 6, **characterised in that** the container is evacuated at least once prior to the introduction of the liquid, in particular prior to a pre-pressurisation with nitrogen, preferably before and/or after flushing of the container, preferably with nitrogen.

8. A method according to Claim 6 or 7, **characterised in that** when the liquid is introduced into the container, return gas expelled therefrom is collected and used for a flushing treatment of subsequent containers.

9. A method according to at least one of the preceding Claims 1 to 8, **characterised in that** a gas in liquid phase, preferably liquid nitrogen and/or oxygen, is introduced into the container prior to the introduction of the liquid, in particular prior to an evacuation step.

10. A device for the preparation and bottling of liquids (45), in particular beverages, enriched with oxygen or with an oxygen/gas mixture in containers (40), in particular bottles or cans, wherein the liquid enriched with oxygen and, optionally, other gases, in particular in dissolved form, is filled into the containers by the device and they are then sealed in a pressure-tight manner with a closure, in particular for carrying out the method according to at least one of Claims 1 to 9, **characterised in that** the device (7) has at least one filling member (11) with a liquid valve (18), at least one gas valve (23, 34) and a nitrogen-filled chamber (10,29,30), wherein a flow connection for flushing and/or pre-pressurising the container (40) with nitrogen can be established between a container (46) applied to the filling member (11) and the chamber (10,29,30) via the gas valve (23,24), and **in that** the device (7) has a reservoir (8) partially filled with liquid (9), and the liquid in the reservoir can be pressurised with nitrogen, preferably in the range from 1 to 10 bar.

11. A device according to Claim 10, **characterised in that** the filling member (11) can be connected to a flushing gas channel (30) via a flushing valve (23) and/or to a pure gas channel (29) via a pre-pressurisation valve (24).

12. A device according to Claim 10 or 11, **characterised in that** the filling member (11) can be connected to a relief and/or vacuum channel (30) via at least one relief valve (26,27).

13. A device according to the preamble of Claim 10, **characterised in that**, after enrichment with oxygen, liquid is directed into a partially filled tank (15) and can be pressurised with nitrogen.

14. A device according to Claim 10 or 13, **characterised in that** the liquid in the reservoir (8) and/or tank (15) can be separated from the pressure-exerting gas at least approximately completely, in particular by movable floats (43,44) or elastic membranes.

15. A device according to the preamble of Claim 10, **characterised in that** an apparatus (41) for introducing liquid gas, in particular nitrogen or oxygen, into the open containers is disposed upstream of the device (7) for filling containers (40).

## Revendications

1. Procédé pour produire et verser des liquides enrichis en oxygène ou en un mélange de gaz et d'oxygène, en particulier des boissons, dans des récipients, en particulier des bouteilles ou des canettes, dans lequel le liquide enrichi en oxygène et éventuellement en d'autres gaz, en particulier sous la forme dissoute est versé dans des récipients et ceux-ci sont fermés ensuite de manière étanche, **caractérisé en ce que** le liquide enrichi est maintenu pendant le processus de remplissage au moins temporairement dans une atmosphère d'azote.

2. Procédé selon le préambule de la revendication 1, **caractérisé en ce** le liquide est maintenu dès le début de l'enrichissement en oxygène ou en un mélange de gaz et d'oxygène au moins temporairement dans une atmosphère d'azote.

3. Procédé selon la revendication 1 ou 2, **caractérisé en ce que** le liquide est maintenu dès le début de l'enrichissement jusqu'à l'atteinte de la hauteur de remplissage souhaitée dans le récipient dans une atmosphère d'azote.

4. Procédé selon au moins l'une quelconque des revendications 1 à 3, **caractérisé en ce que** l'atmosphère d'azote présente une surpression, de préférence dans la plage comprise entre 1 et 10 bars.

5. Procédé selon au moins l'une quelconque des revendications 1 à 4, **caractérisé en ce qu'**un récipient est pressurisé avant l'introduction du liquide enrichi par de l'azote, en particulier à une pression correspondant à la pression de remplissage du liquide.

6. Procédé selon au moins l'une quelconque des revendications 1 à 5, **caractérisé en ce que** le récipient est rincé au moins une fois avant l'introduction du liquide, en particulier avant la pressurisation, de préférence avec de l'azote.

7. Procédé selon au moins l'une quelconque des revendications 1 à 6, **caractérisé en ce que** l'air est évacué au moins une fois du récipient avant l'introduction du liquide, en particulier avant une pressurisation par de l'azote, de préférence avant et/ou après un rinçage du récipient, de préférence avec de l'azote.

8. Procédé selon la revendication 6 ou 7, **caractérisé en ce que** lors de l'introduction du liquide dans le récipient, du gaz de retour refoulé de celui-ci est collecté et utilisé pour un traitement de rinçage des récipients suivants.

9. Procédé selon au moins l'une quelconque des revendications 1 à 8, **caractérisé en ce qu'**un gaz en phase liquide, de préférence de l'azote liquide et/ou de l'oxygène est introduit dans le récipient avant l'introduction du liquide, en particulier avant l'étape d'évacuation.

10. Dispositif pour produire et verser des liquides (45) enrichis en oxygène ou en un mélange de gaz et d'oxygène, en particulier des boissons, dans des récipients (40), en particulier des bouteilles ou des canettes, dans lequel le liquide enrichi en oxygène et éventuellement en d'autres gaz, en particulier sous la forme dissoute est versé par le dispositif dans les récipients et ceux-ci sont fermés ensuite de manière étanche par un dispositif de fermeture, en particulier pour réaliser le procédé selon au moins l'une quelconque des revendications 1 à 9, **caractérisé en ce que** le dispositif (7) présente au moins un organe de remplissage (11) avec une soupape liquide (18), au moins une soupape gazeuse (23, 34) et une chambre (10, 29, 30) remplie d'azote, dans lequel une liaison conductrice peut être établie pour le rinçage et/ou la pressurisation du récipient (40) par de l'azote par le biais de la soupape gazeuse (23, 24) entre un récipient (46) mis en place sur l'organe de remplissage (11) et la chambre (10, 29, 30), et
**en ce que** le dispositif (7) présente une cuve (8) partiellement remplie de liquide (9) et le liquide peut être mis sous pression dans la cuve avec de l'azote, de préférence dans la plage comprise entre 1 et 10 bars.

11. Dispositif selon la revendication 10, **caractérisé en ce que** l'organe de remplissage (11) peut être relié par le biais d'une soupape de rinçage (23) à un canal de gaz de lavage (30) et/ou par le biais d'une soupape de précontrainte (24) à un canal de gaz purifié (29).

12. Dispositif selon la revendication 10 ou 11, **caractérisé en ce que** l'organe de remplissage (11) peut être relié par au moins une soupape de décharge (26, 27) à un canal de décharge et/ou de vide (30).

13. Dispositif selon le préambule de la revendication 10, **caractérisé en ce qu'**un liquide est conduit après l'enrichissement en oxygène dans un réservoir (15) partiellement rempli et peut être mis sous pression par de l'azote.

14. Dispositif selon la revendication 10 ou 13, **caractérisé en ce que** le liquide peut être séparé dans la cuve (8) et/ou le réservoir (15) au moins approximativement complètement du gaz exerçant une pression, en particulier par des corps flottants (43, 44) mobiles ou des membranes élastiques.

15. Dispositif selon le préambule de la revendication 10, **caractérisé en ce qu'**un dispositif (41) pour l'introduction de gaz liquide, en particulier d'azote ou d'oxygène, dans les récipients ouverts est disposé en amont du dispositif (7) de remplissage des récipients (40).
